# EUROPEAN PATENT APPLICATION

(11) **EP 2 356 902 A1**
(43) Date of publication of application: **17.08.2011**
(21) Application number: 11154559.6
(22) Date of filing: 15.02.2011
(51) Int. Cl.: A01K 97/12

(54) **Bite indicator**

(30) Priority: 17.02.2010 GB 1002706
(71) Applicant: Catchum 88 Limited, Hockley, Essex SS5 5LR (GB)
(72) Inventor: Nash, Kevin, Hockley, Essex SS5 5LR (GB); Lloyd, Trevor, Shoeburyness, Essex SS3 9QT (GB); Hawker, John, Hadleigh, Suffolk IP7 5AP (GB)
(74) Representative: Messulam, Alec Moses

(57) **Abstract**

A bite indicator (10) is disclosed having a housing (12), a wheel (22) mounted on the housing (12) to rotate freely about an axle, a surface (18) on the housing for supporting a fishing rod in a position in which a line of the fishing rod makes contact with the wheel (22) to cause the wheel to rotate in response to movement of the line and a sensor for producing an electrical pulse with each rotation of the wheel through a predetermined angle. In the invention, an alarm circuit is provided which produces an audible or visible alarm signal only when the time interval between the electrical output pulses of the sensor falls below a predetermined value.

## Description

### Field of the invention

The present invention relates to a bite indicator for use by anglers, the bite indicator having a housing, a wheel mounted on the housing to rotate freely about an axle, a surface on the housing for supporting a fishing rod in a position in which a line of the fishing rod makes contact with the wheel to cause the wheel to rotate in response to movement of the line and a sensor for producing an electrical pulse with each rotation of the wheel through a predetermined angle.

### Background of the invention

Bite indicators of the type using a wheel engaged and rotated by a fishing line are well known and described for example in GB 1,503,596. The wheel is mounted on an axle that carries a member which forms part of a photoelectric, magnetic or electro magnetic sensor which provides an electrical signal indicative of any such movement and its rate. In particular, the sensor produces electrical pulses as the wheel rotates and the repetition frequency of these pulses increases with the speed of rotation of the wheel. The electrical pulses are used to produce audible and/or visible alarm signals to warn the angler of a bite.

In this type of bite indicator, it has also been proposed to provide a control to vary the sensitivity. EP 0 570 117 varies the sensitivity using a counter. The pulses generated by the sensor are applied to a counter which in turn activates the associated alarm circuit. As a result an audible or visible alarm signal is only produced after a selected number of electrical pulses have been produced by the sensor.

The sensitivity adjustment proposed in EP 0 570 117 only sets the length of line movement that can take place before a sound is emitted. If the line is constantly moving, for example on account of a water current or wind conditions, a sound is generated with every given length of line movement regardless of how slowly or rapidly that movement takes place. The only effect of altering the counter to vary the sensitivity is to vary the number of audible or visible pulses that a given length of line movement will produce.

### Summary of the invention

According to a first aspect of the present invention, there is provided a bite indicator having a housing, a wheel mounted on the housing to rotate freely about an axle, a surface on the housing for supporting a fishing rod in a position in which a line of the fishing rod makes contact with the wheel to cause the wheel to rotate in response to movement of the line and a sensor for producing an electrical pulse with each rotation of the wheel through a predetermined angle, wherein an alarm circuit is provided for producing an audible or visible alarm signal only when the time interval between the electrical output pulses of the sensor falls below a predetermined value.

In the first aspect of the invention, an alarm signal is not triggered by the length of line moving over the wheel but by its speed of movement. Even a brief rapid twitch of the line will suffice to generate an alarm signal whereas several metres of line can be drawn from the reel without an alarm being generated provided the line movement falls below the set speed sensitivity threshold.

The alarm signals generated by a bite indicator of the present invention provides the angler with more meaningful information especially when fishing in windy conditions or in fast moving waters. Under such conditions, the rig at the end of the line may drift or be dragged gradually without a fish having taken the bait. Systems proposed in the prior art system that only detect line movement will therefore produce a continuous stream of alarm signals even though no bite has occurred. Reducing the sensitivity would reduce the rate at which the such false alarm signals are produced but at the same time it would render the bite indicator insensitive to a bite that only causes a short line movement.

As is well recognised, regardless of the sensitivity of an alarm system, it is only as good as its false alarm rate. Thus, in the prior art, at least under some conditions, genuine bite alarm detection signals would go unnoticed in the constant stream of false alarms.

In the preferred embodiment of the invention, the threshold length of time interval between electrical pulses is adjustable by the angler to suit the prevailing conditions. The sensitivity can thus be set to suit the prevailing speed at which the line is being dragged. As long as the line only moves slowly, that is to say below the set threshold speed, no alarm signal at all is produced. However, even a brief acceleration of the line to beyond the set threshold speed, as would occur when a fish takes the bait, will result in an alarm signal.

Conventionally, the wheel used in bite indicators is disc like, that is to say its diameter greatly exceeds its axial thickness. The axle on which the wheel is mounted carries the member that interacts with a sensor to enable rotation of the wheel to be detected. The member may for example be a paddle that interrupts the light path between a light emitting diode (LED) and a phototransistor but electro-optical sensing severely affects battery life because the LED has to operate constantly. It is generally preferred instead to use magnets that are detected by a reed switch or a Hall effect device. When magnets are used, the prior art configuration limits the number of electrical pulses that can be produced by the detector during each rotation of the wheel.

In a second aspect of the present invention, there is provided a bite indicator having a housing, a wheel mounted on the housing to rotate freely about an axle, a surface on the housing for supporting a fishing rod in a position in which a line of the fishing rod makes contact with the wheel to cause the wheel to rotate in response to movement of the line and a sensor for producing an electrical pulse with each rotation of the wheel through a predetermined angle, characterised in that the wheel is in the form of a drum mounted in the housing for rotation about an axis that extends horizontally and transverse to the line of the fishing rod when the bite indicator is in use, and in that the drum has an axial length comparable with or greater than its diameter and magnets are mounted on the drum that are spaced apart from each other circumferentially.

By placing the magnets on or in the surface of the drum, rather than on the axle which supports it, it is possible to maintain the drum and its axle entirely outside a watertight enclosure containing the sensor.

It is currently preferred to mount four magnets 90° apart on one end of the drum. It is however alternatively possible to use more magnets by spacing them both axially and circumferentially around the drum. Such a construction permits the use of a larger magnets or an increase in the number of magnets.

Advantageously, the drum is arranged on the housing of the bite indicator in such a manner as to be exposed and visible over its entire length.

It is further preferred for the drum to be formed of a transparent material and for it to overlie one or more light sources, such as light emitting diodes, that are energised when a bite is detected. In this way, the wheel itself glows when a bite is detected avoiding the need to clutter the remaining surface of the housing.

Conveniently, a light source may be energised with a lesser intensity to serve as a guide for aligning the fishing line with the bite indicator when fishing under poor lighting conditions.

If the wheel is faceted and polished the resulting light scattering allows the warning light to be seen more clearly when viewed from a distance of from the side.

Electronic bite indicators are commonly used with a line tensioner which may take the form of a free weight that will move up and down as the line tension increases and decreases. More commonly, the line tensioner includes a pivoted weighted arm or a resiliently bendable arm that acts to tension the arm. The arm is connected to the line by a line clip that is designed to release the line automatically when the angler strikes and lifts the rod off its rest.

Hitherto, a line tensioning arm has been mounted on the rod rest to which the bite indicator is secured, be it a bank stick or a pod with three or more legs. Because of the independent mounting of the bite indicator and the tensioning arm, their correct alignment could not always be guaranteed.

To mitigate this problem, it is preferred for the housing to include a fixing to permit a line tensioning arm to be secured directly to the housing of the indicator.

The fixing may conveniently be a screw threaded nut to enable the line tensioning arm to the directly mounted on the housing by means of a screw threaded fastener. Alternatively, the fixing may take the form of a bayonet socket.

### Brief description of the drawings

The invention will now be described further, by way of example, with reference to the accompanying drawings, in which:
Figure 1 is a perspective view of a bite indicator of the invention,
Figure 2 is a block diagram of circuitry of the bite detection.

### Detailed description of the preferred embodiment

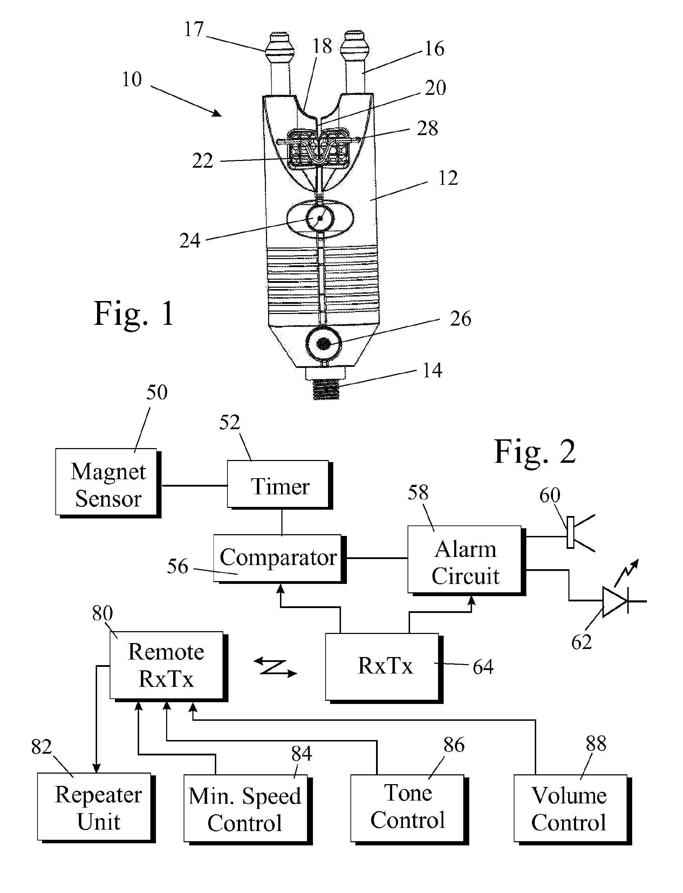

The bite indicator 10 shown in Figure 1 comprises a housing 12 containing an electrical circuit and a battery powering the electrical circuit. The electrical circuit is controlled remotely and only a press button 24 is provided on the housing 12 to switch the power to the electrical circuit from the internal battery on and off.

A screw thread 14 is provided at the lower end of the housing 12 to allow the housing to be secured to a rod rest. At its upper end, two upstanding metal posts 16 are screwed into the housing 12. The posts 16 prevent a rod resting in a recess 18 from moving from side to side and coming away from the bite indicator 10, even when the fishing line is dragged sideways. To resist accidental displacement of the rod still further, the posts 16 have enlarged heads 17 so that the rod is captured by the overhang and cannot escape when a lateral force is applied to it but can be pulled out readily if raised vertically by the angler.

A groove 20 positioned centrally beneath the recess 18 allows the line of the fishing rod to make contact with a freely rotatable drum 22 that has several rows of small magnets, the individual magnets being staggered from one another both axially and tangentially.

The drum 22 is disposed entirely outside the bite indicator and is made of a polished, faceted, transparent plastics material. Behind the drum 22, there are positioned two LED's that are obscured by the drum 22 and are not visible in Figure 1. The LED's are illuminated by the circuit within the housing 12 when a bite is detected causing the drum 22 to glow. The polished and faceted surface of the drum 22 allows the light emitted by the LED's to be seen clearly from a distance and from the side.

Because the drum 22 is arranged outside the housing 12, water can be effectively prevented from entering the housing because it is not necessary to provide a seal around any moving part passing through the wall of the housing. Being stationary, the LED's and the button 24 can be sealed simply and effectively while the field of the magnets mounted on the drum 22 can be sensed through the wall of the housing.

The sensor positioned within the housing to detect the magnets of the drum 22 may be any convention sensor, such as a reed switch or a Hall effect sensor. The sensor is required only to produce an electrical pulse every time the drum moves through a predetermined angle. As there are several rows of magnets on the drum, the angle between individual magnets can be small. For example, if it is only possible on account of the relative size of the magnets and the drum to position four magnets in a given row, then if all the magnets lie in the same plane a pulse could be produced only after a rotation of 90° of the drum. However, by providing, say, four rows of magnets and staggering them tangentially from one another, one can produce a pulse after each rotation of the drum through only 22.5°.

Bite indicator are commonly used in conjunction with a line tensioner in the form of a swinging or bending arm that is attached to the line by an automatically releasing line clip and pulls down on the line.

The line tensioner ensures that the line remains in good frictional contact with the sensing wheel and also itself acts to indicate if there is a change in line tension and whether the line tension has increased or decreased. The housing 12 in Figure 1 has near its lower end a threaded nut which allows the line tensioner to be mounted directly on the bite indicator. Conventionally, the line tensioner is separately mounted on the rod support and can therefore move out of alignment with the bite indicator.

Because the line tensioner is now mounted in close proximity to the drum 22, there is a risk of it hitting the drum when the anglers strikes to hook a fish. To protect the drum against accidental damage, a wire guard 28 is mounted on the housing 12 forward of the drum 22, the guard being shaped with a central V so as not to interfere with the fishing line. The wire guard also prevents the line tensioner from interfering with the rotation of the drum 22.

Referring now to Figure 2, electrical output pulses of the magnet sensor 50 are applied to reset a timer 52, which may for example include a crystal oscillator. The timer 52 generates a signal indicative of the time between consecutive magnets passing the sensor 50. This signal is applied to a comparator 56 which compares it with a predetermined threshold value received from a transmit/ receive circuit 64. Once the time duration signal drops below the set threshold, that is to say once the speed of rotation of the drum 22 exceeds a set speed, the comparator 56 sends an output signal to an alarm circuit 58 that activates the LED's 62 located behind the drum 22 and a loudspeaker 60 that produces a tone.

All the circuits described so far are located within the housing 12, while all the remaining circuits shown in Figure 2, that it to say all circuits with a reference numeral of 80 or higher, are arranged within a remote control unit.

The remote control unit has its own transmit/receive circuit 80 which communicates with the circuit 64 in the housing 12 of the bite indicator. The remote control unit serves both to control the bite indicator and to act as a repeater. Thus, the remote control includes a repeater circuit 82 which essentially produces the same sounds and flashing lights as the bite indicator to warn the angler of a bite when out of sight of the rod and the bite indicator.

Additionally, the remote control unit comprises a control 84 to enable the angler to set the minimum velocity that produces an alarm, as well controls 86 and 88 to the tone and volume, respectively, of the emitted sound. These parameters may be set using up/down buttons or potentiometers and the desired control signals are conveyed to the comparator 56 and the alarm circuit 58 by the radio link comprising the two transmit/receiver circuits 64 and 80.

If desired, the control signal can also transmit to the bite indicator a signal to activate an LED permanently with a low intensity, this being useful for locating the rod on the bite indicator in low light conditions.

## Claims

1. A bite indicator (10) having a housing (12), a wheel (22) mounted on the housing (12) to rotate freely about an axle, a surface (18) on the housing for supporting a fishing rod in a position in which a line of the fishing rod makes contact with the wheel (22) to cause the wheel to rotate in response to movement of the line and a sensor (50) for producing an electrical pulse with each rotation of the wheel through a predetermined angle, **characterised in that** an alarm circuit (58) is provided for producing an audible or visible alarm signal only when the time interval between the electrical output pulses of the sensor (50) falls below a predetermined value.

2. A bite indicator as claimed in claim 1, wherein the threshold length of time interval between electrical pulses is adjustable by the angler to suit the prevailing conditions.

3. A bite indicator as claimed in claim 1 or 2, **characterised in that** the wheel (22) is in the form of a drum mounted in the housing for rotation about an axis that extends horizontally and transverse to the line of the fishing rod when the bite indicator is in use, and **in that** the drum (22) has an axial length comparable with or greater than its diameter and magnets are mounted on the drum that are spaced apart from each other circumferentially.

4. A bite indicator as claimed in claim 3, wherein four magnets are mounted 90° apart on one end of the drum.

5. A bite indicator as claimed in claim 3, wherein the magnets are spaced apart both axially and circumferentially around the drum.

6. A bite indicator as claimed in any of claims 3 to 5, wherein the drum (22) is arranged on the housing of the bite indicator in such a manner as to be exposed and visible over its entire length.

7. A bite indicator as claimed in claim 6, wherein the drum (22) is formed of a transparent material and overlies one or more light sources that are energised when a bite is detected.

8. A bite indicator as claimed in claim 7, wherein the drum (22) is faceted and polished.

9. A bite indicator as claimed in claim 7 or 8, wherein a light source is energised with a reduced intensity to serve as a guide for aligning the fishing line with the bite indicator when fishing under poor lighting conditions.

10. A bite indicator as claimed in any preceding claim, the housing includes a fixing (26) to permit a line tensioning arm to be secured directly to the housing of the indicator.

11. A bite indicator as claimed in claim 10, wherein the fixing (26) is a screw threaded nut to enable the line tensioning arm to the directly mounted on the housing by means of a screw threaded fastener.
